# EUROPÄISCHE PATENTSCHRIFT

(11) **EP 1 757 798 B1**
(45) Veröffentlichungstag und Bekanntmachung des Hinweises auf die Patenterteilung: **28.05.2008**
(21) Anmeldenummer: 06118934.6
(22) Anmeldetag: 15.08.2006
(51) Int. Cl.: F02M 35/024, B01D 35/30

(54) **Filterrohrleitung**
Filter pipe line
Conduite pour élément filtrant

(30) Priorität: 22.08.2005 DE 202005013293 U
(43) Veröffentlichungstag der Anmeldung: 28.02.2007
(73) Patentinhaber: MANN+HUMMEL GmbH, 71638 Ludwigsburg (DE)
(72) Erfinder: Linhart, Jochen, 71409 Schwaikheim (DE); Fasold, Michael, Auenwald 71549 (DE); Bauer, Sascha, Auenwald 71549 (DE)

(56) Entgegenhaltungen:
- DE-A1- 10 200 100
- GB-A- 1 189 808
- GB-A- 1 336 603
- GB-A- 2 239 898
- JP-A- 11 132 116

## Beschreibung

Die Erfindung betrifft eine Filterrohrleitung insbesondere für die Saugrohranlage eines Verbrennungsmotors der im Oberbegriff der Ansprüche 1 und 7 angegebenen Gattung.

Filterrohrleitungen für die Saugrohranlage eines Verbrennungsmotors umfassen ein Rohluftrohr, mit dem Umgebungsluft mit ihrer Schmutzpartikelfracht in ein Filtergehäuse geleitet wird, in dem ein Filterelement aufgenommen ist. Nach dem Durchtritt der Rohluft durch das Filterelement wird die von Schmutzpartikeln befreite Verbrennungsluft durch ein an das Filtergehäuse angeschlossenes Reinluftrohr in Richtung Motor abgeführt. Bei der Montage der Saugrohranlage wird die Filterrohrleitung als komplette Baugruppe montiert. Bei bekannten Filterrohrleitungen sind dabei das Rohluftrohr und das Reinluftrohr sowie das Filtergehäuse separate Bauteile, welche zusammengefügt werden, wobei vor der Montage der Rohre das Filterelement in das Filtergehäuse einzusetzen ist.

Der vorliegenden Erfindung liegt die Aufgabe zugrunde, das gattungsgemäße Filterrohr derart weiterzubilden, dass es wirtschaftlicher herstellbar ist und eine rasche Montage ermöglicht.

Diese Aufgabe wird erfindungsgemäß durch eine Filterrohrleitung mit den Merkmalen des Anspruchs 1 oder 7 gelöst.

Erfindungsgemäß ist vorgesehen, das Rohluftrohr, das Filtergehäuse und das Reinluftrohr als einteiliges Filterrohr herzustellen, welches als kompakte Baugruppe leicht montierbar ist und darüber hinaus eine völlige Dichtigkeit gewährleistet. Besonders kostengünstig kann das erfindungsgemäße Filterrohr im Kunststoffspritzgussverfahren oder im Blasformverfahren hergestellt werden. Um ein Filterelement mit größerem Querschnitt als dem Rohrquerschnitt in das Filtergehäuse einzusetzen, ist nach der Erfindung eines der an das Filtergehäuse angeschlossenen Rohre mit einem temporär aufweitbaren Querschnitt versehen, welches ein Einführen des Filterelementes durch das aufweitbare Rohr ermöglicht.

In einer ersten vorteilhaften Ausgestaltung der Erfindung ist das aufweitbare Rohr mit einem Längsschlitz versehen, welcher bis an die vorgesehene Position des Filterelementes reicht. Zum Einsetzen des Filterelementes kann das Rohr aufgrund des Längsschlitzes auseinandergeklappt werden und wird nach dem Plazieren des Filterelementes wieder verschlossen. Ein dauerhafter Verschluss kann durch Anordnung von äußeren Verschlussmitteln wie Clipsen oder Muffen erreicht werden.

Eine Durchführung des Filterelementes durch das aufweitbare Rohr mit einfachen Mitteln wird durch Anformung mindestens einer radial nach außen geführten Spreizfalte an dem aufweitbaren Rohr des Filterrohres erreicht. Die Spreizfalte kann wirtschaftlich beim Urformverfahren des einteiligen Filterrohres angeformt werden und reicht über die Länge des aufweitbaren Rohres bis zu der vorgesehenen Position des Filterelementes. An der vorgesehenen Position bildet das in das Filterrohr eingesetzte Filterelement das Filtergehäuse aus. Die Einführung auch von erheblich querschnittsstärkeren Filterelementen in das aufweitbare Rohr ist durch Anbringung mehrerer diametral gegenüberliegender Spreizfalten möglich.

In einer weiteren Ausgestaltung der Erfindung ist das Filterrohr im Bereich des aufweitbaren Rohres aus einem elastischen Kunststoff gefertigt, wodurch das Rohr zum Einführen des Filterelementes elastisch aufweitbar ist und nach dem Durchschieben des Filterelementes wieder auf den alten Querschnitt zurückkehrt. Vorteilhaft besteht das Filterrohr dabei aus einem Gemisch aus einem thermoplastischen Material und einem elastischen Kunststoff mit abschnittsweise unterschiedlichen Anteilen. Dabei wird zweckmäßig als elastischer Kunststoff ein thermoplastisches Elastomer (TPE) eingesetzt. Für das formbeständige Rohr wird der Einsatz von Polyamid (PA) oder insbesondere Polypropylen (PP) bevorzugt. Das Filterrohr kann mit abschnittsweise unterschiedlichen Anteilen des thermoplastischen Elastomers (TPE) und des Polypropylens (PP) durch Koextrusion urgeformt werden, wobei die erforderlichen Gemischverhältnisse an einem geeigneten Extruder eingestellt werden können. Vorzugsweise besteht das Filterrohr dabei im Bereich des aufweitbaren Rohres aus 90% thermoplastischem Elastomer und 10% thermoplastischem Material. Diese Anteile werden über die Länge des Filterrohres bis zu 10% thermoplastischem Elastomeranteil im Bereich des anderen Rohres variiert.

Vorteilhaft wird das Rohluftrohr für die Einführung des Filterelementes in das einteilige Filterrohr aufweitbar gestaltet, wodurch Undichtigkeiten auf der Reinluftseite ausgeschlossen werden.

Alternativ oder zusätzlich zu einer Aufweitung eines Rohrabschnittes des einteiligen Filterrohres kann ein in seinem Querschnitt elastisch verringerbares Filterelement in das Filtergehäuse eingesetzt werden. Dabei kann das Filterelement vorteilhaft mit einer derartigen Form gestaltet werden, dass es im für die Einführung in das Rohr maßgeblichen Querschnitt verkleinert und mit Halteelementen festgehalten wird, welche nach dem Einführen des Filterelementes an der vorgesehenen Position lösbar sind. Nach dem Lösen der Halteelemente, beispielsweise durch Impuls oder Aufbringung erhöhten Innendrucks im Rohr, drängt das elastisch verkleinerte Filterelement in seine Normalposition und schließt den Querschnitt des Filterrohres.

Alternativ kann das elastisch aufweitbare Filterelement auf einfache Weise mit einem Einführungsrohr an die vorgesehene Position gebracht werden. Dabei wird das elastisch zusammengefaltete Filterelement in das Einführungsrohr eingesetzt, welches bei der Montage bis an die vorgesehene Position des Filterelementes in das Filterrohr eingeführt wird. Mittels einer Schubstange oder Stößel wird das Filterelement aus dem Einführungsrohr gedrückt und kehrt elastisch in seine vorgesehene Ausdehnung zurück.

Eine axiale Sicherung des Filterelementes in dem Filterrohr kann durch eine Dichtung erreicht werden, welche zwischen dem Filterelement und einer Wand des Filterrohres in eine in der Wand ausgesparte umlaufende Nut eingefügt wird. Eine solche umlaufende Dichtung kann auf einfache Weise durch Einsprühen eines Kunststoffschaums, insbesondere einem PUR-Schaum hergestellt werden.

Ausführungsbeispiele der Erfindung sind nachstehend anhand der Zeichnung näher erläutert. Es zeigen:
- Fig. 1: eine Ansicht eines einteiligen Filterrohres mit einem aufweitbaren Rohluftrohr,
- Fig. 2: eine Ansicht eines einteiligen Filterrohres an einer alternativen Ausgestaltung,
- Fig. 2a: eine Ansicht eines einteiligen Filterrohrs mit alternativer Gestaltung biegbarer Rohrabschnitte,
- Fig. 3: einen Querschnitt durch ein Rohluftrohr mit aufweitbarem Querschnitt und
- Fig. 4: eine teilweise geschnittene Ansicht eines Filterrohres mit eingesetztem Filterelement.

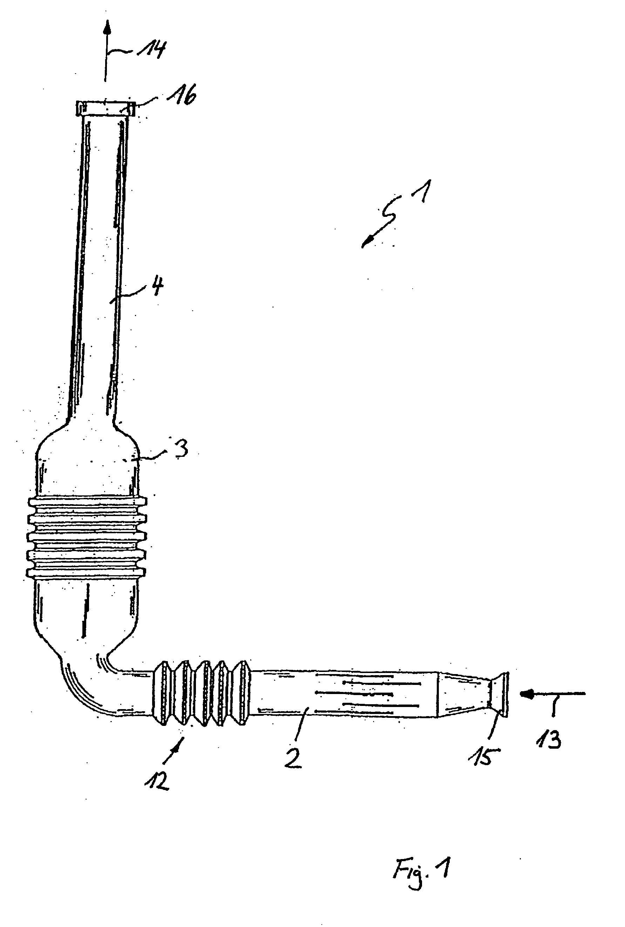

Fig. 1 zeigt eine Filterrohrleitung 1 für die Saugrohranlage eines Verbrennungsmotors mit einem Rohluftrohr 2, welches an ein Filtergehäuse 3 mündet, an dem einen Reinluftrohr 4 angeschlossen ist. Über den Anschlussstutzen 15 des Rohluftrohres 2 wird in Pfeilrichtung 13 Luft angesaugt, welches ein im Filtergehäuse 3 aufgenommenes Filterelement passieren muss und dabei von seinerihrer Schmutzpartikelfracht befreit wird. Die durch das Filterelement getretene Verbrennungsluft wird über das Reinluftrohr 4 in Pfeilrichtung 14 dem Motor zugeführt.

Das Filterrohr 1 ist als einteiliges Bauteil durch Kunststoffextrusion hergestellt. Dabei werden durch Blasformen beim Urformen des einteiligen Filterrohres flexible Abschnitte vorgesehen, in denen die Rohrwandung als Faltenbalg 12 ausgebildet ist. Das einteilige Filterrohr ist bei der Montage in die Saugrohranlage leicht handhabbar und wird über einen Anschlussstutzen 15 am Rohluftrohr 2 und einen Anschluss 16 am Reinluftrohr 4 an den vorgesehenen Platz in der Saugrohranlage des Verbrennungsmotors eingepasst. Durch geeignete Anordnung der blasgeformten Faltenbalge 12 kann auf einfache Weise eine passgenaue Anbindung des Filterrohres 1 erfolgen.

Das Filterelement weist einen größeren Querschnitt als die an das Filtergehäuse 3 angeschlossenen Rohre 2, 4 auf und liegt so in seiner Lage fest. Das Filterrohr 1 besteht aus einem Gemisch aus thermoplastischem Polypropylen (PP) und einem thermoplastischen Elastomer (TPE) mit über die Länge des gesamten Filterrohres 1 abschnittsweise unterschiedlichen Anteilen. Die Anteile des Kunststoffgemisches sind dabei von etwa 90% thermoplastischem Elastomer (TPE) im Bereich des Reinluftrohres 4 bis zu 10% TPE im Bereich des Filtergehäuses 3 und des Rohluftrohres 2 variiert. Aufgrund der hohen Anteile von 90% zu 10% TPE/PP ist das Reinluftrohr 4 in seinem Querschnitt temporär aufweitbar, wodurch eine Einführung des Filterelementes mit größerem Querschnitt als dem Rohrquerschnitt an die vorgesehene Position möglich ist. Nach dem Durchführen des Filterelementes zieht sich das gummielastische TPE in die ursprüngliche Normallage mit reduziertem Rohrquerschnitt zurück. Im Bereich des Filtergehäuses 3, also an der für das Filterelement vorgesehenen Stelle legt sich das Filterelement an die Rohrwandung an und wird durch den nachfolgenden verjüngten Abschnitt in seiner Lage axial festgehalten. Zusätzlich kann eine Fixierung durch Kleben oder durch Einbringung einer Schaumdichtung zweckdienlich sein. Alternativ kann das Rohluftrohr 2 durch entsprechende Verteilung der Materialanteile über die Länge des Filterrohres 1 mit einem aufweitbaren Querschnitt gestaltet sein.

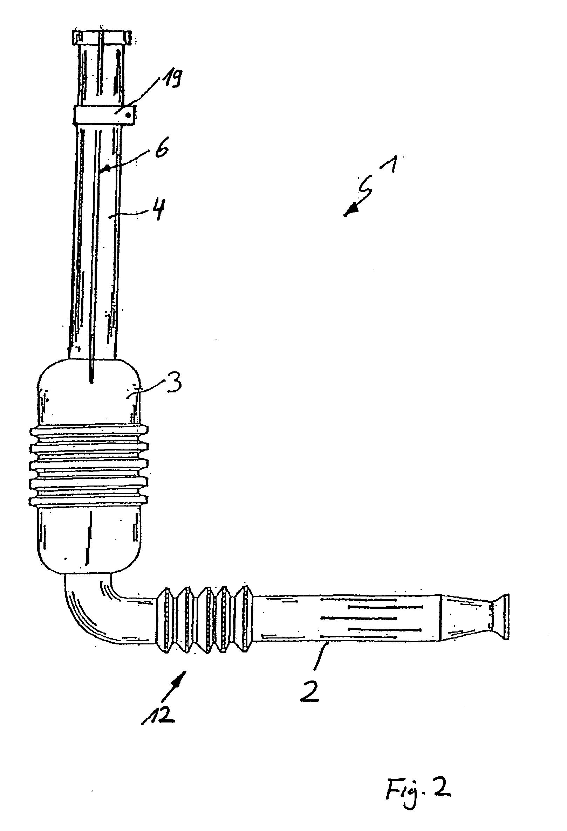

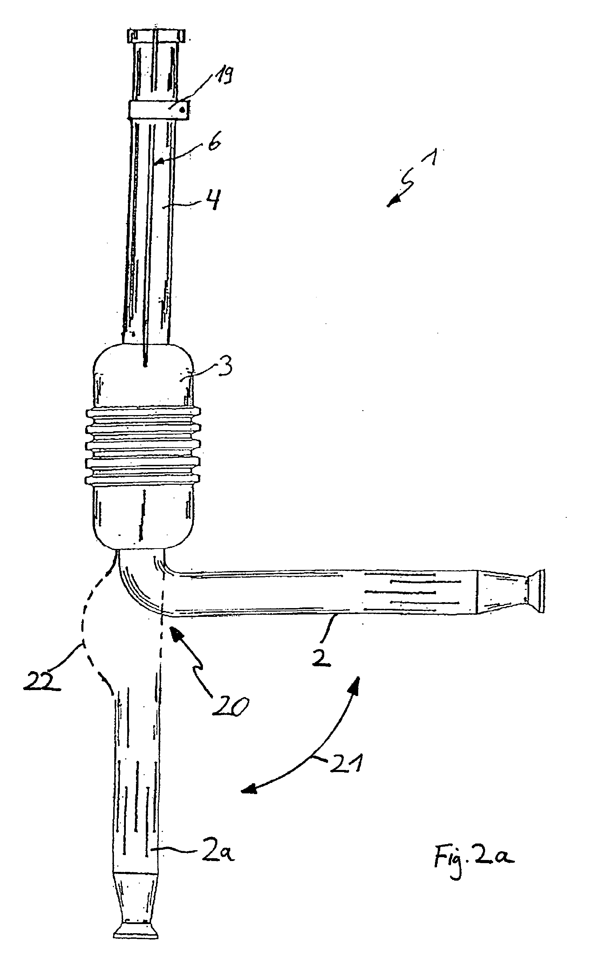

Fig. 2 zeigt eine alternative Ausgestaltung eines einteiligen Filterrohres 1, wobei das Reinluftrohr 4 mit einem bis an das Filtergehäuse 3 reichenden Längsschlitz 6 versehen ist. Der durchgehende Längsschlitz 6 erlaubt ein Aufklappen des Reinluftrohres 4 und ein Einführen des Filterelementes in das Filtergehäuse 3 mit größerem Querschnitt. Der Spalt 6 wird durch eine das Reinluftrohr 4 umgreifende Schelle 19 oder eine Clipsverbindung zusammengehalten. Zusätzlich oder alternativ kann eine sichere Abdichtung des Längsschlitzes 6 durch Anordnung eines Schrumpfschlauches erreicht werden. Vorteilhaft kann aber auch das Rohluftrohr 2 mit einem Längsschlitz versehen sein und die Einführung des Filterelementes von der Rohluftseite erfolgen, wobei auf eine völlige Abdichtung des Längsschlitzes verzichtet werden kann.

Fig. 2a zeigt eine alternative Ausgestaltung eines einteiligen Filterrohres 1, bei der anstelle eines Faltenbalges 12 in der Rohrgestaltung nach Fig. 2 ein biegsamer Rohrabschnitt 20 vorgesehen ist. Im gezeigten Ausführungsbeispiel ist das Rohluftrohr 2 biegsam gestaltet und kann zur Einpassung in eine Saugrohranlage in Pfeilrichtung 21 verschwenkt werden. Dabei ist die Rohrwandung im biegsamen Abschnitt flexibel gestaltet und die Bogenlängen der Rohrwandung entsprechend dem Biegeradius auf die gebogene Einbaustellung des Rohres abgestimmt, so dass sich in der geraden Stellung 2a des Rohluftrohres die strichliert gezeigte Ausbeulung 22 der Rohrwandung ergibt, um die größere Länge des Rohres in diesem Wandabschnitt aufzunehmen. Diese Gestaltung hat gegenüber der Ausführung des flexiblen Rohrabschnitts gemäß Fig. 2 mit einem Faltenbalg den Vorteil geringerer Druckverluste bei gleichen Querschnitten über die Rohrlänge.

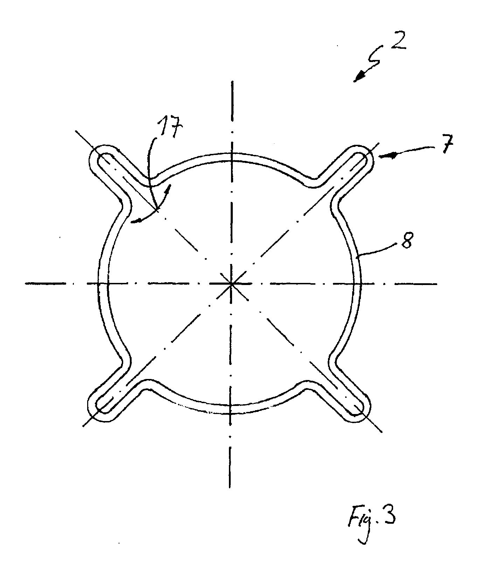

Fig. 3 zeigt einen Querschnitt durch ein aufweitbares Rohr, im vorliegenden Fall das Rohluftrohr 2 gemäß einer alternativen Ausgestaltung. Die Wand 8 des Rohluftrohres ist dabei über den Umfang des Rohluftrohres 2 mit radial nach außen gezogenen Spreizfalten 7 versehen. Zur Durchführung des Filterelementes mit größerem Querschnitt werden die Schenkel der Spreizfalten 7 in Pfeilrichtung 17 auseinandergedrängt und der Rohrquerschnitt vergrößert.

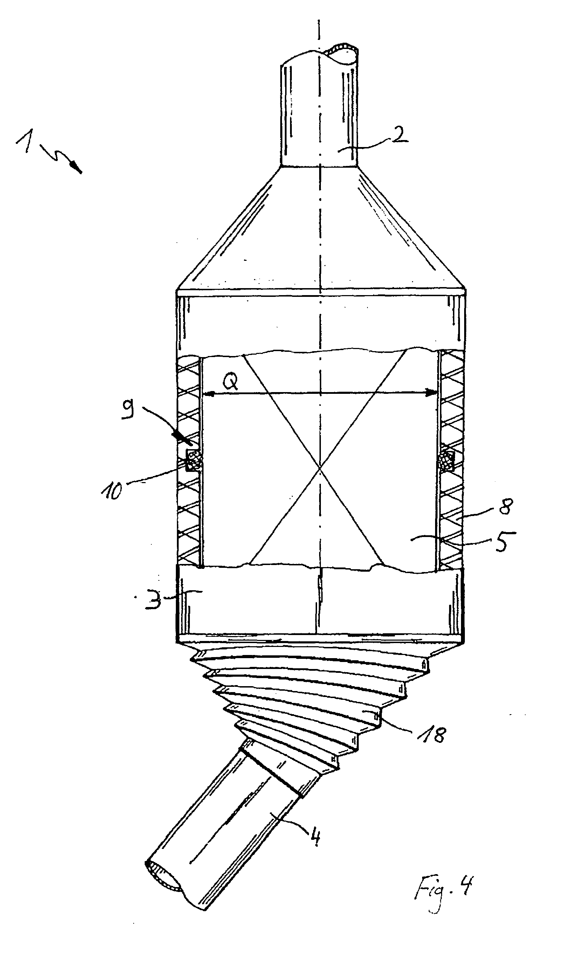

Fig. 4 zeigt eine weitere Ausgestaltung eines Filterrohres 1 mit einem Filtergehäuse 3 mit einteilig daran angeschlossenem Rohluftrohr 2 und Reinluftrohr 4 auf den gegenüberliegenden Seiten des Filtergehäuses 3. Zur Einführung der Filterpatrone 5 in das Filtergehäuse 3 durch das Rohluftrohr 2 ist eine im Querschnitt Q elastisch verringerbare Filterpatrone 5 vorgesehen. Zur Einführung der Filterpatrone 5 in das Filtergehäuse 3 wird ein hier nicht dargestelltes Montagerohr benutzt, in dem die zusammengefaltete Filterpatrone 5 aufgenommen ist. Das Montagerohr wird in das Rohluftrohr 2 eingeführt und bis an die vorgesehene Position im Filtergehäuse 3 geschoben. Danach wird mit einem Stößel die Filterpatrone 5 aus dem Montagerohr geschoben und weitet sich im Filtergehäuse 3 auf. Alternativ kann ein Haltemittel eingesetzt werden, welches die Filterpatrone 5 in der volumenreduzierten Form hält und nach dem Einführen der Filterpatrone in das Filtergehäuse 3 gelöst wird. Dafür kommt ein mechanisches Lösen durch geeignete Haken am Ende einer Montagestange als Haltemittel oder ein Lösen durch Impuls oder Innendruck im Rohluftrohr in Betracht.

In der Wand 8 des einteiligen Filterrohres 1 ist im Bereich des Filtergehäuses 3 eine umlaufende Nut 9 ausgespart, in die nach dem Einsetzen der Filterpatrone 5 eine Dichtung 10 aus PUR-Schaum eingespritzt wird. Durch die PUR-Dichtung 10 wird das Filterelement 5 axial fixiert und zusätzlich ein ungewolltes Umströmen des Filterelementes 5 ausgeschlossen.

Das Rohluftrohr 2, das Filtergehäuse 3 und das Reinluftrohr 4 sind als einteiliges Filterrohr durch Spritzgießen hergestellt. Dabei kann - je nach Anwendungsfall - durch Blasformen an den geeigneten Rohrstellen ein Faltenbalg 18 vorgesehen sein. Zur Vereinfachung der Montage der Filterpatrone 5 kann zusätzlich zu der im Querschnitt reduzierbaren Filterpatrone 5 ein aufweitbares Rohr zweckmäßig sein.

## Patentansprüche

1. Filterrohrleitung, insbesondere für die Saugrohranlage eines Verbrennungsmotors, mit einem Filtergehäuse, mit einem Rohluftrohr (2), welches in das Filtergehäuse (3) mündet, in dem ein Filterelement (5) aufgenommen ist, und mit einem an das Filtergehäuse (3) angeschlossenen Reinluftrohr (4) zur Abfuhr der durch das Filterelement (5) getretenen Reinluft **dadurch gekennzeichnet, dass** das Reinluftrohr (2), das Filtergehäuse (3) und das Rohluftrohr (4) ein einteiliges Filterrohr (1) bilden, wobei eines der an das Filtergehäuse (3) angeschlossenen Rohre (2) einen temporär aufweitbaren Querschnitt (Q) aufweist, so dass ein Filterelement mit größerem Querschnitt als dem Rohrquerschnitt in das Filtergehäuse eingesetzt werden kann.

2. Filterrohrleitung nach Anspruch 1, **dadurch gekennzeichnet, dass** das aufweitbare Rohr (2) mit einem Längsschlitz (6) versehen ist.

3. Filterrohrleitung nach Anspruch 1, **dadurch gekennzeichnet, dass** das aufweitbare Rohr (2) über seine Länge an seinem Umfang mit mindestens einer radial nach außen geführten Spreizfalte (7) versehen ist.

4. Filterrohrleitung nach Anspruch 3, **dadurch gekennzeichnet, dass** mehrere diametral gegenüberliegende Spreizfalten (7) vorgesehen sind.

5. Filterrohrleitung nach Anspruch 1, **dadurch gekennzeichnet, dass** das Filterrohr (1) im Bereich des aufweitbaren Rohres (2) aus einem elastischen Kunststoff, insbesondere einem Gemisch aus einem thermoplastischen Material und einem Kunststoff oder Gummi mit abschnittsweise unterschiedlichen Anteilen, besteht.

6. Filterrohrleitung nach Anspruch 5, **gekennzeichnet durch** Polypropylen (PP) als thermoplastisches Material.

7. Filterrohrleitung, insbesondere für die Saugrohranlage eines Verbrennungsmotors, mit einem Filtergehäuse, mit einem Rohluftrohr (2), welches in das Filtergehäuse (3) mündet, in dem ein Filterelement (5) aufgenommen ist, und mit einem an das Filtergehäuse (3) angeschlossenen Reinluftrohr (4) zur Abfuhr der durch das Filterelement (5) getretenen Reinluft **dadurch gekennzeichnet, dass** das Rohluftrohr (2), das Filtergehäuse (3) und das Reinluftrohr (4) ein einteiliges Filterrohr (1) bilden und dass das Filterelement (5) zur Einbringung in das Filtergehäuse (3) in seinem Querschnitt (Q) elastisch verringerbar ist, so dass ein Filterelement mit größerem Querschnitt als dem Rohrquerschnitt in das Filtergehäuse eingesetzt werden kann.

8. Filterrohrleitung nach Anspruch 7, **gekennzeichnet durch** ein Halteelement für das elastisch verkleinerte Filterelement (5), welches beim Einführen des Filterelementes (5) in das Rohr (2) an der vorgesehenen Position für das Filterelement (5) lösbar ist.

9. Filterrohrleitung nach Anspruch 7, **gekennzeichnet durch** ein in das Filterrohr (1) einführbares Montagerohr, in welchem das Filterelement (5) aufnehmbar ist.

10. Filterrohrleitung nach einem der vorhergehenden Ansprüche, **dadurch gekennzeichnet, dass** zwischen dem Filterelement (5) und einer Wand (8) des Filterrohres (1) eine Dichtung (10), insbesondere aus Kunststoffschaum und im Speziellen aus PUR bestehend, in einer in der Wand (8) ausgesparten umlaufenden Nut (9) eingefügt vorzugsweise eingespritzt ist.

## Claims

1. Filter conduit, in particular for the intake manifold of an internal combustion engine with a filter housing (3), with a raw air pipe (2) which opens to the filter housing (3) into which a filter element (5) is placed, and with a clean air pipe (4) connected to the filter housing (3) for discharging the clean air entered through the filter element (5), **characterized in that** the clean air pipe (4), the filter housing (3) and the raw air pipe (4) form a one-piece filter pipe (1), with one of the pipes (2) featuring a temporarily expandable cross section (Q).

2. Filter conduit according to claim 1, **characterized in that** the expandable pipe (2) is provided with a longitudinal slot (6).

3. Filter conduit according to claim 1, **characterized in that** the expandable pipe (2) is provided over its length at its circumference with at least one expandable fold (7) leading radially to the outside.

4. Filter conduit according to claim 3, **characterized in that** several diametrically opposed expandable folds (7) are provided for.

5. Filter conduit according to claim 1, **characterized in that** the filter pipe (1) consists in the area of the expandable pipe (2) of an expandable synthetic material, in particular a mixture of a thermoplastic material and a synthetic material or rubber with sectionally variable shares.

6. Filter conduit according to claim 5, **characterized by** polypropylene (PP) used a thermoplastic material.

7. Filter conduit, in particular for the intake manifold of an internal combustion engine with a filter housing (3), with a raw air pipe (4) which opens to the filter housing (3) into which a filter element (5) is placed, and with a clean air pipe (4) for discharging the clean air entered through the filter element (5), **characterized in that** the clean air pipe (2), the filter housing (3) and the raw air pipe (4) form a one-piece filter pipe (1), and that the cross-section (Q) of the filter element (5) can be elastically reduced for allowing the insertion into the filter housing (3).

8. Filter conduit according to claim 7, **characterized by** a retention element for the elastically reduced filter element (5) which can be detached when inserting the filter element (5) into the pipe (2) at the position intended for the filter element (5).

9. Filter conduit according to claim 7, **characterized by** a mounting pipe to be inserted into the filter pipe (1) and in which the filter element (5) can be placed.

10. Filter conduit according to one of the above-mentioned claims, **characterized in that** between the filter element (5) and a wall (8) of the filter pipe (1) a sealing (10) made in particular of foam plastics and especially of PUR is preferably injected into a circumferential groove (9) which is recessed in the wall (8).

## Revendications

1. Conduite de filtre, en particulier pour le système collecteur d'admission d'un moteur à combustion avec un boîtier de filtre, avec un conduit d'air brut (2) qui débouche dans le boîtier de filtre (3) dans lequel est placé un élément filtrant (5), et avec un conduit d'air pur (4) raccordé au boîtier de filtre (3) pour évacuer l'air pur ayant traversé l'élément filtrant (5), **caractérisée en ce que** le conduit d'air pur (4), le boîtier de filtre (3) et le conduit d'air brut (2) forment un conduit de filtre (1) d'un seul tenant, l'un des conduits (2) raccordés au boîtier de filtre (3) présentant une section (Q) pouvant être temporairement élargie.

2. Conduite de filtre selon la revendication 1, **caractérisée en ce que** le conduit extensible (2) est muni d'une fente longitudinale (6).

3. Conduite de filtre selon la revendication 1, **caractérisée en ce que** le conduit extensible (2) est muni sur sa longueur, sur sa circonférence, d'au moins un pli d'écartement (7) dirigé radialement vers l'extérieur.

4. Conduite de filtre selon la revendication 3, **caractérisée en ce que** plusieurs plis d'écartement (7) diamétralement opposés sont prévus.

5. Conduite de filtre selon la revendication 1, **caractérisée en ce que** le conduit de filtre (1) est constitué, au niveau du conduit extensible (2), d'une matière synthétique élastique, en particulier d'un mélange d'un matériau thermoplastique et d'un matériau synthétique ou caoutchouc, avec des proportions variables par sections.

6. Conduite de filtre selon la revendication 5, **caractérisée par** du polypropylène (PP) comme matériau thermoplastique.

7. Conduite de filtre, en particulier pour le système collecteur d'admission d'un moteur à combustion avec un boîtier de filtre, avec un conduit d'air brut (2), qui débouche dans le boîtier de filtre (3) dans lequel est placé un élément filtrant (5), et avec un conduit d'air pur (4) raccordé au boîtier de filtre (3) pour évacuer l'air pur ayant traversé l'élément filtrant (5), **caractérisée en ce que** le conduit d'air brut (2), le boîtier de filtre (3) et le conduit d'air pur (4) forment un conduit de filtre (1) d'un seul tenant et **en ce que**, pour l'insertion dans le boîtier de filtre (3), il est possible de réduire élastiquement la section (Q) de l'élément filtrant (5).

8. Conduite de filtre selon la revendication 7, **caractérisée par** un élément de maintien pour l'élément filtrant (5) réduit élastiquement, qui peut être détaché lors de l'introduction de l'élément filtrant (5) dans le conduit (2) dans la position prévue pour l'élément filtrant (5).

9. Conduite de filtre selon la revendication 7, **caractérisée par** un conduit de montage pouvant être enfilé dans le conduit de filtre (1) et dans lequel l'élément filtrant (5) peut être placé.

10. Conduite de filtre selon l'une des revendications précédentes, **caractérisé en ce qu'**entre l'élément filtrant (5) et une paroi (8) du conduit de filtre (1), un joint (10) en particulier constitué d'une mousse de matière synthétique et notamment de PUR, est inséré de préférence par injection dans une rainure périphérique (9) ménagée dans la paroi (8).
